# EUROPEAN PATENT APPLICATION

(11) **EP 1 834 527 A1**
(43) Date of publication of application: **19.09.2007**
(21) Application number: 06111032.6
(22) Date of filing: 13.03.2006
(51) Int. Cl.: A23L 1/015, A23L 1/217, A23L 1/164

(54) **Food product comprising a mixture of calcium salts or a calcium double salt**

(71) Applicant: PURAC Biochem BV, 4200 AA Gorinchem (NL)
(72) Inventor: Brouwer, Johannes, Theodorus, 2565 JV, Den Haag (NL); Boerboom, Frank, 3702 BB, Zeist (NL); Bontenbal, Elize, Willem, 6701 CE, Wageningen (NL)
(74) Representative: Beetz, Tom

(57) **Abstract**

The invention pertains to a food product that is suitable for heat processing, which comprises a mixture of calcium salts of a first and a second anion or a calcium double salt having a first and a second anion, which mixture of calcium salts or which calcium double salt has a solubility better than 35 g/L in water of 20° C, characterized in that the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (1.4:6.8), (42:0.7), and (1.4:41). Most preferably the food product is French fries or potato chips and the food comprises a mixture of calcium lactate and calcium chloride.

## Description

The invention pertains to a food product comprising a mixture of calcium salts of a first and a second anion or a calcium double salt having a first and a second anion, which mixture of calcium salts or which calcium double salt has a solubility better than 35 g/L in water of 20° C, to the use of said calcium salt mixture or calcium double salt as additive in a food product and to the use thereof for preventing or inhibiting the formation of acrylamide in food.

The last years a wide variety of foods have been tested positive for the presence of acrylamide monomer. Acrylamide has especially been found in carbohydrate food products that have been processed at high temperatures.

Acrylamide is a potentially cancer-causing chemical, which is formed in many types of cooked foods. Although not exactly known for humans, acrylamide has a carcinogenic potency in rats that is similar to that of other carcinogens in food. Although further research is needed to assess what health effects, if any, may result from human consumption of acrylamide at the levels commonly found in such foods, many consumers have voiced concern.

Examples of foods that have tested positive for acrylamide include coffee, cereals, cookies, potato chips, crackers, french-fried potatoes, breads and rolls, and fried breaded meats. Accordingly, it is an object of many inventions to provide methods for reducing the level of acrylamide in foods.

In WO 2004/026042 and WO 2004/026043 the food is contacted with asparaginase and sugar to inactivate asparagine, which is believed to play a role in the acrylamide formation.

In WO 2004/032648 a similar process was disclosed. According to that invention, the formation of acrylamide during heat treatment of raw material comprising carbohydrate, protein and water is reduced by treating the raw material with an enzyme before the heat treatment. Accordingly, the method provides preparing a heat-treated product, comprising the sequential steps of providing a raw material which comprises carbohydrate, protein and water, and treating the raw material with an enzyme.

In WO 2004/075656 a process and apparatus for a method for reducing the amount of acrylamide in thermally processed foods is described. The method relies on the manipulation of various unit operations used in the production of food products, particularly the washing and cooking, unit operations. For example, the washing unit operation can be modified to provide a contacting step at an increased time and temperature, and adding components as calcium chloride and L-cysteine to an aqueous solution used for the contacting.

The above methods suffer from various disadvantages. Asparaginases are expensive enzymes and may affect other transformations as well. Special apparatuses and methods for thermally processing food cannot be used in household situations, and adding calcium chloride, although effective in preventing acrylamide formation, has unacceptable effects on the taste of the food.

There is therefore a need to a method for preventing or at least inhibiting the formation of acrylamide in food products during heat processing.

To this end it was now found that an effective method preventing or inhibiting the formation of acrylamide in heat processed food products, without affecting the taste thereof negatively could be obtained by using a mixture of calcium lactate and calcium chloride.

In GB 1079628 calcium lactate was used in a food product, but only as a stiffening agent to improve the physical appearance and plate life, not for preventing the formulation of acrylamide.

The present invention provides a food product that is suitable for heat processing, which comprises a mixture of calcium salts of a first and a second anion or a calcium double salt having a first and a second anion, which mixture of calcium salts or which calcium double salt has a solubility better than 35 g/L in water of 20° C, characterized in that the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (1.4:6.8), (42:0.7), and (1.4:41).

In a preferred embodiment according to the invention the food comprises a mixture of calcium lactate and calcium chloride. Surprisingly, this combination appears to be very effective and acceptable, although calcium lactate only is insufficiently active to reduce the acrylamide formation sufficiently, and calcium chloride alone in amounts to effectively reduce the acrylamide formation gives unacceptable sensory properties to the food product. Furthermore, such amounts of calcium chloride have a negative effect on fat content and expansion. The claimed area provides a combination of calcium chloride and calcium lactate to obtain a food product that has at least acceptable properties with regard to the combination of taste, expansion, fat/volume ratio, and reduction of formed acrylamide.

In a preferred embodiment according to the invention the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (3.5:6.8), (35:6.8), and (3.5:34).

In another embodiment according to the invention the concentration of calcium is in the area designated by the quadrangle defined by points (4.5:10.2), (17.5:6.8), (28.6:6.8) and (14:20.4). The acrylamide formation in this embodiment is reduced with more than 30% of the amount that is obtained according to a process not using the instant combination.

In another embodiment according to the invention the concentration of calcium is in the area designated by the triangle defined by points (1.4:19.0), (28:13.6) and (14:27.9). In this embodiment the reduction of acrylamide is further reduced to 50% of the amount that is obtained according to a process not using the instant combination, however slightly at the cost of taste, expansion and fat/volume ratio.

In a better embodiment according to the invention the concentration of calcium is in the area designated by the quadrangle defined by points (7:13), (27.7:7.7), (15.6:18.7), and (10.9:17). This area covers an optimal region in terms of reduction of acrylamide, whereas the taste, fat/volume, and expansion are about similar to a blank.

In the most preferred embodiment according to the invention the concentration of calcium is in the area designated by the triangle defined by points (10.9:17), (15.6:18.7), and (19.7:15.3). In this area all properties are improved with respect to a blank. Furthermore, this area provides ratios of calcium chloride and calcium lactate which gave the optimum balance between taste, acrylamide formation, expansion, and fat content.

Calcium salts having solubility better than 35 g/L (in water of 20° C) include, but are not restricted to calcium chloride, calcium lactate, calcium lactobionate, and calcium acetate.

Calcium double salts according to this invention are defined as calcium salts having at least two different anions. Such double salts may contain a further anion, which salts are sometimes also called triple salts. If the calcium salt contains three different anions, the number of milimoles calcium of two of these must satisfy the ratio requirements of the claims. Suitable double salts have solubility better than 35 g/L (in water of 20° C) and include, but are not restricted to calcium lactate gluconate, calcium lactate citrate, and calcium lactate gluconate citrate.

The invention further provides the use of said mixture of calcium salts or a calcium double salt, more particularly a calcium lactate and calcium chloride mixture for preventing or inhibiting acrylamide formation in a food product during heat processing, and improving taste, expansion, and fat/volume ratio.

The food products that are particularly suitable for the present method are products based on fried potato, such as French fries, batters and coatings and potato chips in various forms. These food products can be made from potatoes, mashed potatoes, potato starch, and the like.

The invention is further illustrated by the following non-limitative examples.

Different calcium salts were added to a mixture of potato granules, potato starch, Paselli^{®} P (potato fiber, ex Avebe, The Netherlands), salt and water in order to prepare snack pellets. The product was prepared by use of a single screw extruder and temperatures around the gelatinization temperature of potato starch. After one-week storage, the snack pellets were fried into snacks. The quality of these snacks was characterized by its sensory properties and acrylamide content. The moisture content of the snack pellets and of the final snacks was controlled and monitored. All snacks produced contained the same moisture content before frying. Also after frying the moisture contents of the samples was similar (2.1%).

It was found that addition up to about 35 mM/Kg (milimoles/Kg dried food) calcium by Puracal® (trade name for calcium lactate, ex Purac Biochem B.V., The Netherlands) resulted in the best sensory characteristics, which were comparable with two blanks. Addition of more calcium salts and in particular of more than 45 mM/Kg calcium by Puracal^{®} resulted in a lower expansion ratio and worse taste than the blank. The preferred amount of calcium added by Puracal is less than 42 mM/Kg.

The amount of calcium added by calcium chloride should preferably at least 7 mM/Kg, more preferably more than 13.6 mM/Kg to sufficiently inhibit acrylamide formation. However, the amount should preferably below 40.8 mM/Kg, more preferably less than 22 mM/Kg to prevent bad taste of the product.

Table 1 describes the formula for production of basic snack pellets. The recipe contains 37% moisture. Puracal^{®} PP and Gluconal^{®} and CaCl₂ were added to the dry ingredients (potato granules + potato starch + Paselli^{®} P + salt) in approximately equimolar ratios. The amount of calcium in the added weight was corrected by decreasing half of that weight of potato starch and half of that weight of potato granules.

**Table 1 Formula for standard sample snack pellets, 10 Kg ingredients in total**

| | Blank |
|---|---|
| | (Kg) |
| Potato granules | 3.257 |
| Potato starch | 3.257 |
| Salt | 0.131 |
| Paselli P | 0.521 |
| Water | 2.835 |

Based on this recipe the following compositions were evaluated. The change made to the recipe to include these substances was to add the substances to the above base recipe and to adjust the water content to match the new dry matter content.

| | Composition of the samples of the study Concentration in mM/Kg | | | | | | | | | | | | |
|---|---|---|---|---|---|---|---|---|---|---|---|---|---|
| | Comparison | | | | | | | | | | According to invention | | |
| Composition | a | b | C | d | e | f | g | h | i | j | I | II | III |
| Calcium chloride | 0 | 13.6 | 34 | 68 | 0 | 0 | 0 | 0 | 0 | 0 | 9.0 | 36.7 | 9.0 |
| Calcium lactate | 0 | 0 | 0 | 0 | 14 | 35 | 70 | 0 | 0 | 0 | 11.5 | 13.3 | 36.3 |
| Calcium gluconate | 0 | 0 | 0 | 0 | 0 | 0 | 0 | 13.5 | 34.8 | 67.5 | 0 | 0 | 0 |

Snack pellets were fried for 25 seconds at 190° C in a fryer in arachid oil. After cooling the products were evaluated by an expert panel of four persons on different attributes (color, appearance, texture, and flavor) of which only color and flavor were significantly different. These attributes were evaluated by calculating the averages of the different judgments for each person. Subsequently, these data were related to the sensory judgments of the blank on all attributes and accordingly rated on a linear scale of 0 to 5 (0 very negative, 5 very positive) (Table 2).

**Table 2**

| Main attribute | Sub-attribute |
|---|---|
| Color | Pale |
| | Yellow |
| | Brown |
| | Heterogeneity |
| Flavor | Rancid/stale |
| | Bitter/burned |
| | Fat |
| | Acid |
| | Other abnormality |

The acrylamide content of a number of samples was analyzed according to an LC-MSMS method. The potato snack samples (Wokkels^{®}) were extracted overnight in water-methanol (2:8 v/v). After centrifugation and freezing, the samples were cleaned (mixed-bed ion exchange) and measured by HPLC-triplequad mass spectrometry system (LC-MSMS). To quantify the acrylamide content, an internal standard (D₃-acrylamide) was added to all the samples before the extraction.

Table 3 shows that the acrylamide content of the samples with calcium chloride and Puracal® were much lower than of the blank. Higher levels of calcium chloride and calcium lactate resulted in a lighter color and significantly lower acrylamide content. The flavor was much improved by addition of the 35 mM/Kg calcium lactate and the combination of 9 mM/Kg calcium chloride and 11.5 mM/Kg calcium lactate.

**Table 3 Effect of addition of different calcium salts on acrylamide content and average brown color of fried snack**

| Composition | Acrylamide ratio | Taste | Color |
|---|---|---|---|
| A | 1.00 | 3.93 | 4.25 |
| B | 0.58 | 3.74 | 4.47 |
| c | 0.25 | 3.63 | 4.18 |
| d | 0.051 | 3.06 | 4.31 |
| e | 0.75 | 3.68 | 4.18 |
| f | 0.56 | 4.61 | 4.53 |
| g | 0.54 | 3.75 | 3.50 |
| h | 0.83 | 3.43 | 3.94 |
| i | 0.86 | 3.37 | 3.43 |
| j | 0.97 | 2.43 | 3.31 |
| I | 0.65 | 4.36 | 4.37 |
| II | 0.17 | 3.00 | 4.47 |
| III | 0.60 | 3.74 | 4.47 |

The numbers of Table 3 are the results from the trials. Indicated are the compositions tested, the acrylamide expressed as the ratio of the acrylamide level of the blank, and mean scores of taste and color as determined by the sensory panel.

## Claims

1. A food product suitable for heat processing, comprising a mixture of calcium salts of a first and a second anion or a calcium double salt having a first and a second anion, which mixture of calcium salts or which calcium double salt has a solubility better than 35 g/L in water of 20° C, **characterized in that** the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (1.4:6.8), (42:0.7), and (1.4:41) .

2. The food product of claim 1 wherein the concentration of calcium is in the area designated by the triangle defined by points (3.5:6.8), (35:6.8) and (3.5:34).

3. The food product of claim 1 wherein the concentration of calcium is in the area designated by the quadrangle defined by points (4.5:10.2), (17.5:6.8), (28.6:6.8) and (14:20.4).

4. The food product of claim 1 wherein the concentration of calcium is in the area designated by the triangle defined by points (1.4:19.0), (28:13.6) and (14:27.9).

5. The food product of claim 1 wherein the concentration of calcium is in the area designated by the quadrangle defined by points (7:13), (27.7:7.7), (15.6:18.7) and (10.9:17).

6. The food product of claim 1 wherein the concentration of calcium is in the area designated by the triangle defined by points (10.9:17), (15.6:18.7) and (19.7:15.3).

7. The food product of claim 1 comprising a mixture of calcium lactate and calcium chloride.

8. The food product of any one of claims 1-7, which product is based on fried potato.

9. The food product of claim 8, which is French fries, potato chips, or potato snacks, bakery products or coatings, batters, and breadings for food products.

10. Use of a mixture of calcium salts of a first and a second anion or a calcium double salt having a first and a second anion, which mixture of calcium salts or which calcium double salt has a solubility better than 35 g/L in water of 20° C, **characterized in that** the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (1.4:6.8), (42 : 0.7), and (1.4 :41) .

11. Use of a mixture of calcium salts of a first and a second anion or a calcium double salt having a first and a second anion, which mixture of calcium salts or which calcium double salt has a solubility better than 35 g/L in water of 20° C for preventing or inhibiting acrylamide formation in a food product during heat processing thereof, **characterized in that** the concentration of calcium expressed as the number of milimoles calcium of the first salt or of the first anion of the double salt to the number of milimoles calcium of the second salt or of the second anion of the double salt per Kg dried ingredients of the food is in the area designated by the triangle defined by points (1.4:6.8), (42:0.7), and (1.4:41).
